# EUROPEAN PATENT APPLICATION

(11) **EP 3 002 970 A1**
(43) Date of publication of application: **06.04.2016**
(21) Application number: 15183786.1
(22) Date of filing: 04.09.2015
(51) Int. Cl.: H04W 28/16, G06Q 30/02, H04W 72/04

(54) **RADIO NETWORK SYSTEM AND OPERATION METHOD THEREOF**

(30) Priority: 30.09.2014 KR 20140131438
(71) Applicant: Samsung Electro-Mechanics Co., Ltd., Suwon-si, Gyeonggi-do 443-743 (KR)
(72) Inventor: CHOI, Byong Hyok, 443-743 Gyeonggi-Do (KR); SEO, Jeong Su, 443-743 Gyeonggi-Do (KR)
(74) Representative: Grünecker Patent- und Rechtsanwälte PartG mbB

(57) **Abstract**

Provided is a radio network system including gateways and end terminals, which includes: a time slot distributing unit configured to distribute time slots by which each of the gateways perform a radio communication, wherein the time slot distributing unit is configured to distribute the time slots such that the closer a distance between each of the gateways, a time difference between beginning points of the time slots becomes longer.

## Description

### CROSS-REFERENCE TO RELATED APPLICATIONS

Claim and incorporate by reference domestic priority application and foreign priority application as follows:

### "CROSS REFERENCE TO RELATED APPLICATION

This application claims the foreign priority benefit under 35 U.S.C. Section 119 of Korean Patent Application Serial No. 10-2014-0131438, entitled filed September 30, 2014, which is hereby incorporated by reference in its entirety into this application."

### BACKGROUND OF THE INVENTION

### 1. Field of the Invention

Embodiments of the present invention relate to a radio network system and an operation method thereof.

### 2. Description of the Related Art

Labels on which information and prices of products are used to display and sale a large number of the products within a given space such as a market.

In general, a price label is prepared by manually writing information (e.g., a price and discount information) required to sell a product on a paper, or by printing such information on the paper according to a standardized format. The price label has been used to be attached to a near position at which the product is mounted.

Although such a method is implemented at a low cost in a simple and easy work, there is a limitation that, when the method is applied to a large retail stores where tens of thousands or more products are displayed in a standard format, and prices of the products are varied from time to time, the conventional paper label type may be not sufficient.

That is to say, when prices of some of a large number of products are varied, there is need to summarize such a variation, followed manually writing or printing information such as the varied price, followed by searching and correcting a label of a corresponding product mounted in the store, followed by replacing the label with a new one.

This causes a problem that a work force is applied to correct or replace the label for a certain period of time every the variation of the prices of the products. As a result, there is a need to improve the problem in consideration of properties of the large retail stores.

In other words, there is a need to develop a method which is capable of quickly and simply correcting the product information at the minimal cost.

Recently, in order to meet these requirements, an attempt has been made to replace the traditional paper label with an electronic tag using an electronic device (see Patent Documents 1 and 2).

Such a replacement method is referred to as an Electronic Shelf Label (ESL), an Electronic Price Label (EPL), an Electronic Information Label (EIL) or the like, according to organizations which develop relevant technologies or a language/cultural difference of each country. This is caused by cultural and linguistic differences in recognizing and describing a label and RFID, but its purpose and use is similar.

Herein, these terms will be referred to as an "E-Tag (or ESL)".

When a radio network system such as the ESL shares the same frequency band, it is likely that a cross talk or interference is generated. Accordingly, in order to optimize the radio communication, there is a need to determine a channel to be used in performing the radio communication.

### SUMMARY OF THE INVENTION

The present invention has been invented in order to overcome the above-described problems and it is, therefore, an object of the present invention to provide a radio network system which is capable of easily establishing a radio network without causing interference.

In accordance with an embodiment of the present invention to achieve the object, there is provided a radio network system including gateways and end terminals, which includes: a time slot distributing unit configured to distribute time slots by which the gateways perform a radio communication, wherein the time slot distributing unit is configured to distribute the time slots such that the closer a distance between the respective gateways, a time difference between beginning points of the time slots becomes longer.

In accordance with the other embodiment of the present invention to achieve the object, there is provided a radio network system operation method for use in a radio network system in which a plurality of gateways and a plurality of end terminals perform a radio communication through a selected channel among a plurality of channel, the method including: calculating a distance between the gateways; and distributing a time slot defining a period of time for which the gateway uses the channel, wherein distributing a time slot includes distributing the time slot in such a manner that the closer the distance between the gateways, a time difference between beginning points of the time slots becomes longer.

Additional aspects and/or advantages will be set forth in part in the description which follows and, in part, will be apparent from the description, or may be learned by practice of the invention.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a view showing a schematic configuration of a radio network system according to an embodiment of the present invention;
FIG. 2 is a view showing an example of a gateway that is included in a radio network system according to an embodiment of the present invention;
FIG. 3 is a view for explaining a principle on which each gateway performs a communication process in the radio network system shown in FIG. 1;
FIG. 4 is a view for explaining an example in which time slots are distributed; and
FIG. 5 is a view for explaining an operation method of a radio network system according to an embodiment of the present invention.

### DETAILED DESCRIPTION OF EMBODIMENTS

Reference will now be made in detail to various embodiments, examples of which are shown in the accompanying drawings. In the following detailed description, numerous specific details are set forth in order to provide a thorough understanding of the present disclosure. However, it will be apparent to one of ordinary skill in the art that the present disclosure may be practiced without these specific details. In other instances, well-known methods, procedures, systems, and components have not been described in detail so as not to unnecessarily obscure aspects of the various embodiments.

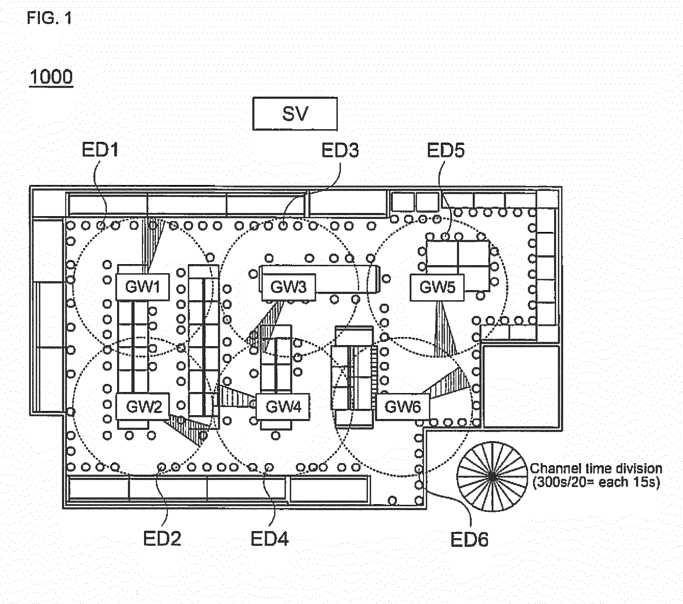

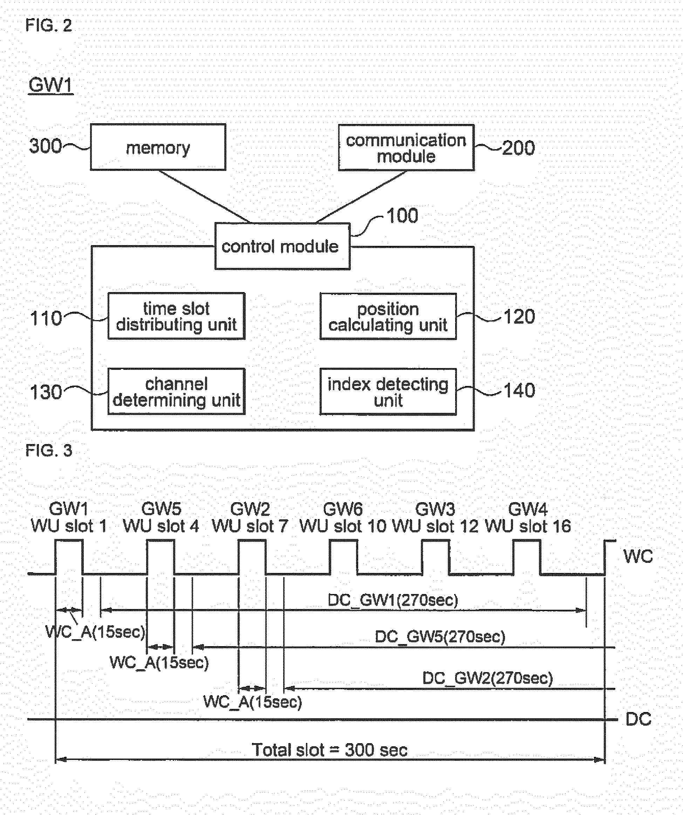

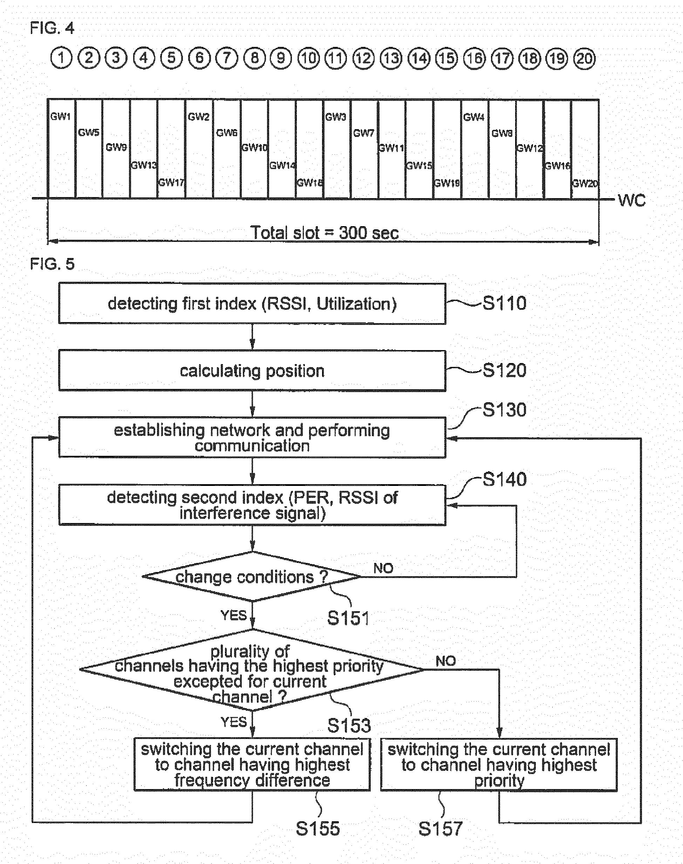

FIG. 1 is a view showing a schematic configuration of a radio network system 1000 in accordance with an embodiment of the present disclosure. FIG. 2 is a view showing an example of a gateway that is included in the radio network system 1000. FIG. 3 is a view explaining a principle on which each gateway performs a communication process in the radio network system 1000 shown in FIG. 1. FIG. 4 is a view explaining an example in which time slots are distributed. FIG. 5 is a view explaining an operation method of the radio network system 1000.

As shown in FIG. 1, the radio network system 1000 according to an embodiment of the present disclosure includes a server SV, a plurality of gateways GW1 to GW6, a plurality of end terminals ED1 to ED6. The server SV and the gateways GW1 to GW6 may be connected to one another through a wire communication network or a radio communication network. The gateways GW1 to GW6 and the end terminals ED1 to ED6 may be connected to one another through the radio communication network. The end terminals ED1 to ED6 are configured to perform a function of displaying information (e.g., name, price, expiry date, etc.) of each product. As an example, an electronic shelf label device (ESL) may be used as the end terminal.

The radio network system 1000 such as the ESL system is configured to perform a radio communication using the IEEE 802.15.4 protocol (hereinafter, referred to as "Zigbee scheme") between the gateways GW1 to GW6 and the end terminals ED1 to ED6. In such a Zigbee scheme, one or more of 16 channels having a frequency bandwidth of 2.4GHz to 5 MHz is selected to perform the radio communication.

On the other hand, the end terminal is woken up only when performing the radio communication while the end terminal enters into a sleep mode when free of the radio communication, thus reducing power consumption. In this case, a wake-up signal for waking up the end terminal using different channels and a data signal including an update data may be transmitted and received. Specifically, among the aforementioned 16 channels, two channels are selected, one of which being used to transmit and receive the wake-up signal, the other being used to transmit and receive the data signal. In this case, the channel used to transmit and receive the wake-up signal is referred to as a "wake-up channel WC" and the channel used to transmit and receive the data signal is referred to as a "data channel DC".

Meanwhile, in IEEE 802.11 protocol (hereinafter, referred to as "Wi-Fi scheme"), a frequency band of 2.4GHz has been used. In addition, the Wi-Fi scheme has a transmission signal power higher than power of the Zigbee scheme about 10 times. As such, when a communication channel of the Zigbee scheme and a communication channel of the Wi-Fi scheme are adjacent to each other, the communication channel of the Zigbee scheme may undergo interference. In view of this point, the radio network system 1000 according to this embodiment of the present disclosure detects radio environment indexes such as strength of the radio signal for each channel and determines the communication channel of the Zigbee scheme. Further, based on the radio environment index obtained thus, the radio network system 1000 determines the channel which is expected to have a relatively low interference and performs the radio communication using the determined channel. However, even if the Zigbee communication is performed using the selected channel, when a new Wi-Fi communication signal using a communication channel adjacent to the communication channel of the Zigbee scheme is generated, the Zigbee scheme is subject to a large disturbance. Thus, in the radio network system 1000 according to this embodiment, a change of channel is applied when the interference exceeds a certain level.

On the other hand, the number of the end terminals which can be covered by one gateway is limited. In addition, as the number of the gateways connected to one terminal is decreased, a data update can be more quickly achieved. However, when excessively increasing the number of the gateways, a burden (e.g., cost, energy consumption) on an establishment of the system may be weighted. Therefore, the number and location of the gateways may be determined by comprehensively considering various factors such as the total amount of the end terminals or obstacles that affects the radio communication signal.

In one embodiment, the plurality of the gateways is configured to perform the radio communication with the end terminals using the same channel.

In some embodiments, each of the gateways may perform the data communication using different channels so that traffic is distributed to each of the gateways. This reduces interference of a radio communication between one gateway and one end terminal with a radio communication between another gateway and another end terminal. However, when the number of the communication channels using the Zigbee scheme is increased, it is likely that the communication channels using the Zigbee scheme may be overlapped with the communication channel using the Wi-Fi scheme. Thus, it is possible to reduce crosstalk between the communication channels using the Zigbee scheme and the communication channels using Wi-Fi scheme by allowing the plurality of gateways to perform the radio communication with the end terminals using the same channel.

In one embodiment, different time slots may be distributed to each of the gateways to perform the radio communication. Here, the time slot means a time unit which is generated by dividing a predetermined period of time by a required number. For example, assuming that one period of time is 300 seconds, 300 seconds are divided into 20 time slots. Thus, one time slot has the duration of 15 seconds. That is to say, a first time slot may be set to 0 to 15 seconds, a second time slot may be set to 15 to 30 seconds, and a 20th time slot may be set to 285 to 300 seconds.

In FIG. 1, a period of time is divided into 20 time slots, and the divided time slots are distributed to each of the gateways. Accordingly, it is possible to reduce the interference of the radio communication between one gateway and end terminals with the radio communication between another gateway and the end terminals, while utilizing the same channel.

In one embodiment, time slots for the wake-up channel are divided so that different time slots may be distributed to each of the gateways. In general, the wake-up signal is transmitted and received between the gateway and the end terminal, followed by transmitting and receiving a data signal. Thus, upon application of the time slot to the wake-up channel, a sequential data communication may be initiated for each of the gateways without assigning another time slot to the data channel.

In this case, a period of time at which different gateways use the data channel may be overlapped.

Therefore, in the radio network system 1000 according to the embodiment of the present disclosure, the time slots are distributed in consideration of a distance between the gateways. In particular, the time slot of gateways having a relatively short distance is adjusted to have a relatively wide time interval, and the time slot of gateways having a relatively long distance is adjusted to have a relatively narrow time interval.

Accordingly, when two gateways transmit and receive data via the same channel during the same period of time, the interference is reduced for a case where the gateways is the gateways are spaced away from each other compared with a case where the gateways are closely adjacent to each other.

Referring to FIG. 1 to FIG. 3, it is appreciated that the wake-up channel is divided into a plurality of time slots, and the time slots are distributed according to an arrangement relationship of the gateways. As shown in FIG. 1, in a case where the first gateway GW1 and the fifth gateway GW5 are spaced at maximum, and the first gateway GW1 and the second gateway GW2 are spaced at minimum, if a first time slot (WU slot 1) is distributed to the first gateway GW1, a fourth time slot (WU slot 4) adjacent to the first time slot (WU slot 1) in terms of time is distributed to the fifth gateway GW5, while a seventh time slot (WU slot 7) is distributed to the second gateway GW2. When the time slots are distributed in this way, a first period of time during which the first gateway GW1 and the first end terminal ED1 transmit and receive data required to update the first end terminal ED1 through a data channel DC, and a second period of time during which the fifth gateway GW5 and the fifth end terminal ED5 transmit and receive data required to update the fifth end terminal ED5 through the data channel DC are superposed for a long period of time. However, since the first gateway GW1 and the fifth gateway GW5 are spaced far from each other, they communicate to each other while maintaining in a minimized interference state. On the other hand, since the first gateway GW1 and the second gateway GW2 are displaced at a relatively short distance, when the first gateway GW1 and the second gateway GW2 perform the radio communication at the same time, a relatively large interference may be generated between the first gateway GW1 and the second gateway GW2. Therefore, time slots which are temporally far apart from each other are distributed to the first gateway GW1 and the second gateway GW2, thus reducing the interference therebetween. Of course, when the radio network system 1000 includes only the first gateway GW1, the second gateway GW2 and the fifth gateway GW5, the first time slot (WU slot 1), a tenth time slot (WU slot 10) and the second time slot WU slot 2 are distributed to the first gateway GW1, the second gateway GW2 and the fifth gateway GW5, respectively. This further reduces the interference. However, as shown in FIG. 1, when the number of the gateways is increased, that is, when the radio network system 1000 includes the first to sixth gateways GW1, GW2, GW3, GW4, GW5 and GW6, it is inevitable that the time slots are adjacent to some extent FIG. 3 shows a case where the first time slot (WU slot 1), the fourth time slot (WU slot 4), the seventh time slot (WU slot 7), the 10th time slot (WU slot 10), a 12th time slot (WU slot 12) and a 16th time slot (WU slot 16) are distributed to the first gateway GW1, the second gateway GW2, the third gateway GW3, the fourth gateway GW4, the fifth gateway GW5 and the sixth gateway GW6, respectively, when the radio network system 1000 includes the first to sixth gateways GW1, GW2, GW3, GW4, GW5 and GW6. In addition, FIG. 4 schematically shows a time slot distribution method when the number of gateways is 20. GW7 to GW20 shown in FIG. 4 represent the seventh to 20th gateways, respectively.

In some embodiments, the data channel may use divided time slots and different time slots may be distributed to respective gateways. In this case, if a time slot is maintained only for a short period of time, the total time required for data communication may be increased. For example, when a required data communication is not completed for a period of time of a time slot included in one cycle, the data communication is resumed in a subsequent cycle. This increases a time required to complete the required data communication.

Referring to FIG. 2, at least one gateway provided in the radio network system 1000 according to the embodiment of the present disclosure includes a memory 300, a communication module 200, a time slot distributing unit 110, a position calculating unit 120, a channel determining unit 130 and an index detecting unit 140. Some units of the time slot distributing unit 110, the position calculating unit 120, the channel determining unit 130 and the index detecting unit 140 may be included in a control module 100.

First, the time slot distributing unit 110 is configured to distribute each time slot that defines a period of time during which each gateway performs the radio communication, in particular, a period of time required to transmit and receive the wake-up signal, as described above. At this time, in the distribution of the time slots, time slots that a difference between start times are set to be larger, are distributed to gateways adjacent to each other, while time slots whose a difference between start times are set to be relatively smaller are distributed to gateways spaced far from each other. In some embodiments, the time slot distributing unit 110 may distribute the time slots using locations of the gateways that are derived at the position calculating unit 120.

The index detecting unit 140 is configured to detect an index of radio environments such as a received signal strength indication (RSSI), a utilization of time at which traffic signal per unit time signal is present, a packet error rate (PER) or the like.

The position calculating unit 120 is configured to calculate a distance between the gateways or positions of the gateways. In one embodiment, the position calculating unit 120 calculates a positional relationship between the gateways using a position estimation algorithm based on an angle of arrival (AOA), a real time location system (RTLS) or the like.

The channel determining unit 130 is configured to determine a state of a channel based on the radio environment index detected at the index detecting unit 140 and select an optimum channel. In addition, when a state of a channel being currently in use is deteriorated below a certain level, the channel determining unit 130 may change the communication channel into a better channel having a relatively good status among the other channels.

Referring to FIGS. 1 to 5, the radio network system 1000 according to the embodiment of the present disclosure is operated in the following procedure.

First, the end terminals and the gateways are installed in consideration of a shape or area of a space where the radio network system 1000 is established, positions where the end terminals are installed.

The radio network system 1000 according to the embodiment of the present disclosure detects the radio environment index in a state where the gateways and the end terminals are disposed (S110).

An example of the radio environment index detected in step S110 may include the RSSI, the utilization or the like. The detection of the index may be carried out by the index detecting unit 140.

The RSSI value may be an average value of time of each channel in 16 channels having a frequency band of 2.4GHz. Accordingly, information on intensities of radio signals in each channel can be collected. This information may be utilized as an index to determine a state of a respective channel. For example, if an average RSSI value per time in a certain channel is large, a communication between the gateway and the end terminal using the certain channel may induce a relatively large interference. On the contrary, if an average RSSI value per time in a certain channel, a communication between the gateway and the end terminal using the certain channel may induce a relatively small interference.

Further, the utilization represents a percentage of communication traffic per unit time in each channel. The utilization may be derived by measuring a time at which an energy level or RSSI value of a channel is equal to or higher than a predetermined reference value. For example, assuming that the radio communication is performed using the certain channel, the energy level or the RSSI value may be above a certain level. The utilization may be driven by measuring whether such a state is maintained for some minutes per unit time (e.g., one hour). When the utilization thus derived is determined to be high, it may be appreciated that the channel has already been used in the other system. Meanwhile, since the purpose of deriving the utilization value is to check a usage state of the channel, there is no a need to decode communication signal packets.

Subsequently, the position calculating unit 120 calculates a distance between the gateways or positions of the gateways (S120).

Thereafter, each of the gateways and each of the end terminals establish a network to perform the radio communication (S130).

At this time, the channel determination unit 130 determines an optimal channel using the radio environment index and establishes the network using the determined optimal channel. Here, the optimal channel means a channel in which radio communication signals transmitted and received by other channels using the channel are present at minimum. For example, as the average RSSI value and the utilization value are decreased, the possibility of using the channel as the optimal channel is increased.

In one embodiment, a rating value may be applied with respect to the average RSSI value and the utilization valve per hour for each channel. The radio network system 1000 according to the embodiment of the present disclosure can use the Zigbee communication scheme. In this case, the RSSI and the utilization are measured with respect to 16 channels having a frequency band of 2.4GHz, and the rating point ranging from one point to 16 point may be applied. In other words, the smaller the average RSSI value per hour is, a higher score is applied, while the greater the average RSSI value per hour is, a lower score is applied. This may be similarly applied for the utilization.

Further, in consideration of the influence of the RSSI value and the utilization value, a weight may be applied. That is, in determining the optimal channel, when the influence of the utilization value is higher than that of the RSSI value, the utilization value is multiplied by a higher weight, followed by adding the same to the RSSI value, thus determining the final rating value. For example, the final rating value may be driven by a formula 0.4 * (rating value according to the RSSI value) + 0.6 * (rating value according to the utilization value).

On the other hand, the average value per hour may be calculated by measurements values for the entire 24 hours. However, a time zone in which the radio communication by the radio network system 1000 such as an ESL system is mainly performed, may be linked to opening hours of a store where the radio network system 1000 is installed. For example, when the opening hours are from 09:00 to 21:00, the radio communication is the most active in the time zone ranging from 07:00 to 23:00. As such, when calculating the average RSSI value and the RSSI value per hour for each channel, values detected in the time zone ranging from 21:00 to 06:00 are excluded so that the reliability of the radio environmental index can be improved.

Upon the calculation of the rating value for each channel in this way, a high priority is applied to a channel of a high rating value, while a low priority is applied to a channel of a low rating value. And, a channel having the highest priority can be selected to establish the network.

In one embodiment, when establishing the network, time slots through each gateway transmits and receives the wake-up signals, may be distributed. Specifically, the time slot distributing unit 110 distributes the time slots based on the distance between the gateways. The gateways transmit and receive the wake-up signals in sequence for a period of time defined by the distributed time slots. This reduces the interference in the interior of the radio network system 1000.

Upon the establishment of the network by the processes as described above, the radio network system 1000 allows the gateways and the end terminals to transmit and receive the required data and controls the end terminals to output an proper information at an proper time zone.

On the other hand, even when the radio network system 1000 performs the radio communication, the radio environment index may be continuously detected (S140). In step S140, unlike step S110, the PER value, the RSSI value of an interference signal or the like is detected.

In this case, a degree of the interference of the channel being currently in use can be evaluated based on PER value. In other words, it is appreciated that the greater the PER value is, the interference becomes more heavily.

Further, the RSSI value of the interference signal may mean a RSSI value of a signal other than signals containing data which is transmitted and received between the gateways and the end terminals. It is appreciated that the greater the RSSI value is, the interference becomes more heavily.

As described above, a state of the interference of the channel being currently in use is evaluated by detecting the PER value and the RSSI value of the interference signal. When it is determined that the state of the interference of the channel being currently in use is deteriorated below a certain reference, the communication channel is changed into another channel, thus decreasing the interference. In some embodiments, conditions applied in changing the channel may include a case where the average PER per time is equal to or higher than 30% and the RSSI value of the interfering signal is greater than -80 dBm.

In one embodiment, the channel determining unit 130 analyzes the radio environment index detected at the index detecting unit 140, and monitors whether the analyzed results correspond to the above-mentioned change conditions (S151). If is determined that the analyzed results correspond to the change conditions, a channel change process is initiated. At this time, a target channel to be changed may be selected using the priorities of the channels. When a plurality of channels having the highest priority other than the current channel is presented (S153), among the plurality of channels having the highest priority, a channel having a highest frequency difference with respect to the current channel. Meanwhile, when there is one channel having the highest priority, the communication channel is switched to the one channel.

Thereafter, the process returns step S130 through the switched channel.

On the other hand, after the channel determining unit 130 selects the optimal channel or the channel to be switched, the optimal channel or the channel to be switched is automatically switched at a stage of the gateway and the time slots are distributed so that the radio communication is automatically resumed. In some embodiments, the selected channel is notified to an administrator such that the administrator manually determines the selected channel. In some embodiments, the time slot distributing unit 110, the position calculating unit 120, the channel determining unit 130 and the index detecting unit 140 may be included in at least one of the gateways. Such a gateway is referred to as a "master gateway". Although the index detecting unit 140 is preferably included in a plurality of gateways, the time slot distributing unit 110, the position calculating unit 120 and the channel determining unit 130 may be included in only the master gateway. With this configuration, the plurality of gateways is responsible for gathering and sharing information while the master gateway is responsible for a final decision. This eliminates a need for the plurality of gateways, thus reducing a resource waste along with the usage of parts of a high specification.

Accordingly, when the radio network system 1000 such as the ESL system is established or is required for a maintenance work, a manager can determine the optimal communication channel without field-operating. Further, the manager can quickly respond to the event of interference, thereby effectively operating the radio network system 1000 at a low cost.

According to the present disclosure, it is possible to easily establishing a radio network system without reducing the influence of interference, thus alleviating the burden of an manager.

While certain embodiments have been described, these embodiments have been presented by way of example only, and are not intended to limit the scope of the disclosures. Indeed, the embodiments described herein may be embodied in a variety of other forms. Furthermore, various omissions, substitutions and changes in the form of the embodiments described herein may be made without departing from the spirit of the disclosures. The accompanying claims and their equivalents are intended to cover such forms or modifications as would fall within the scope and spirit of the disclosures.

## Claims

1. A radio network system including gateways and end terminals comprising:
a time slot distributing unit configured to distribute time slots by which each of the gateways perform a radio communication,
wherein the time slot distributing unit is configured to distribute the time slots such that the closer a distance between each of the gateways, a time difference between beginning points of the time slots becomes longer.

2. The radio network system according to claim 1, further comprising:
a position calculating unit configured to calculate a position of each of the gateways, wherein the time slot distributing unit distributes the time slots in consideration of the position of each of the gateways calculated at the position calculating unit.

3. The radio network system according to claim 2, wherein the position calculating unit calculates the positions of the gateways using at least one of an algorithm for performing a position estimation based on an angle of arrival (AOA) and a real time location system (RTLS).

4. The radio network system according to claim 1, further comprising:
a first index detecting unit configured to detect at least one of a received signal strength (RSSI) for each channel and an utilization of time at which a transmission/reception traffic per unit time in each channel is presented.

5. The radio network system according to claim 4, further comprising:
a channel determining unit configured to determine a channel through which the radio communication is performed between the gateways and the end terminals based on the detection results of the first index detecting unit.

6. The radio network system according to claim 5, further comprising:
a second index detecting unit configured to detect at least one of a packet error rate (PER) of a channel being currently in use and a RSSI value of an interference signal of the channel being currently in use,
wherein the channel determining unit determines whether the channel being currently in use is required to be switched based on the detection results of the second index detecting unit.

7. A radio network system comprising:
a first gateway configured to initiate a radio communication with respect to a first end terminal at a beginning point of a first time slot;
a second gateway configured to initiate the radio communication with respect to a second end terminal at a beginning point of a second time slot, the second gateway being spaced apart from the first gateway by a first distance; and
a third gateway configured to initiate the radio communication with respect to a third end terminal at a beginning point of a third time slot, the third gateway being spaced apart from the first gateway by a second distance larger than the first distance,
wherein a distance between the beginning point of the first time slot and the beginning point of the second time slot is greater than a distance between the beginning point of the first time slot and the beginning point of the third time slot.

8. The radio network system according to claim 7, wherein the first gateway, the second gateway and the third gateway perform the radio communication with respect to the end terminals through the same channel.

9. The radio network system according to claim 8, further comprising:
a position calculating unit configured to calculate distances between the first gateway, the second gateway and the third gateway.

10. The radio network system according to claim 9, further comprising:
a time slot distributing unit configured to distribute the first time slot, the second time slot and the third time slot according to the distances calculated at the position calculating unit.

11. The radio network system according to claim 7, further comprising:
a index detecting unit configured to detect at least one radio environment index selected a group consisting of a received signal strength (RSSI) for each channel, an utilization of time at which a transmission/reception traffic per unit time in each channel is presented, and a packet error rate (PER) of a channel being currently in use.

12. The radio network system according to claim 11, further comprising:
a channel determining unit configured to determine a radio communication channel used for the communication in response to the radio environment index.

13. The radio network system according to claim 12, wherein the channel determining unit is configured to determine that the radio communication channel being currently in use is in an interference state, if it is determined that the radio environment index is out of a predetermined range.

14. The radio network system according to claim 13, wherein the channel determining unit is configured to switch a channel whose at least one of an average value per hour of the received signal strength and the utilization of time at which a transmission/reception traffic per unit time is presented is lowest, into a target channel, if it is determined that the radio communication channel being currently in use is in the interference state.

15. A radio network system operation method for use in a radio network system in which a radio communication is performed between gateways and end terminals through a selected channel among a plurality of channel, the method comprising:
calculating a distance between the gateways; and
distributing a time slot defining a period of time for which the gateway uses the channel;
wherein distributing a time slot includes distributing the time slot such that the closer the distance between each of the gateways, a time difference between beginning points of the time slots becomes longer.

16. The radio network system operation method according to claim 15, further comprising:
detecting a radio environment index; and
determining a communication channel based on the radio environment index.

17. The radio network system operation method according to claim 16, wherein the radio environment index includes at least one of a packet error rate (PER) of a channel being currently in use and a received signal strength (RSSI) value of an interference signal of the channel being currently in use; and
further comprising switching the channel into a channel other than the channel being currently in use when at least one of the packet error rate and the RSSI value of an interference signal of the channel being currently in use is larger than a predetermined value.
